# EUROPÄISCHE PATENTSCHRIFT

(11) **EP 1 071 536 B1**
(45) Veröffentlichungstag und Bekanntmachung des Hinweises auf die Patenterteilung: **26.06.2002**
(21) Anmeldenummer: 99926247.0
(22) Anmeldetag: 14.04.1999
(51) Int. Cl.: B23K 26/10, B23K 26/04, E04F 15/02

(54) **VORRICHTUNG UND VERFAHREN ZUR OBERFLÄCHENSTRUKTURIERUNG VON VERLEGTEN FUSSBODENBELÄGEN**
METHOD AND DEVICE FOR STRUCTURING THE SURFACE OF LAID FLOORING MATERIALS
DISPOSITIF ET PROCEDE DE STRUCTURATION SUPERFICIELLE DE REVETEMENTS DE SOLS POSES

(30) Priorität: 14.04.1998 DE 19816442
(43) Veröffentlichungstag der Anmeldung: 31.01.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEYER, Eckhard, D-01474 Weissig (DE); HAUPTMANN, Jan, D-02739 Eibau (DE); WIEDEMANN, Günter, D-01237 Dresden (DE)
(74) Vertreter: Pfenning, Meinig & Partner GbR
(86) Internationale Anmeldenummer: DE9901129
(87) Internationale Veröffentlichungsnummer: WO9952670

(56) Entgegenhaltungen:
- WO-A-97/48536
- DE-C- 19 518 270
- US-A- 4 794 222

## Beschreibung

Die Erfindung betrifft eine Vorrichtung und ein Verfahren nach den Oberbegriffen der Ansprüche 1 und 15. Dabei können mit diesen nahezu beliebige Materialien von Fußböden an ihrer oberen und bevorzugt geglätteten Oberfläche mit Strukturen versehen werden, die die Rutschfestigkeit und gegebenenfalls den ästhetischen Eindruck erhöhen bzw. verbessern.

Es sind verschiedene Verfahren bekannt, um die Rutschfestigkeit von Fußböden zu erhöhen, wobei die Oberfläche mechanisch bearbeitet oder naßchemisch beeinflußt wird, um die rutschhemmenden Eigenschaften von Fußböden, insbesondere aus Natur-, Kunststein, Kunststoff bzw. andere kunststoffversiegelte bzw. beschichtete Beläge in der gewünschten Form zu beeinflussen.

Daneben ist in DE 195 18 270 C1 ein rutschfester Fußbodenbelag und ein Verfahren zu seiner Herstellung beschrieben. Ein solcher Fußbodenbelag, der eine hochglanzpolierte Oberfläche aufweisen soll, wird durch Impulslaserbeschuß mit linsenförmigen und scharfkantigen Mikrokratern versehen, wobei die Mikrokrater eine Saugnapfwirkung aufweisen sollen und in einer Größe ausgebildet werden, die für das menschliche Auge nicht erkennbar sind. Die Anordnung der Mikrokrater soll statistisch verteilt und in unregelmäßiger Anordnung erzeugt werden. Mit diesen Mikrokratern soll der Reibwert eines solchen Fußbodenbelages auf oberhalb 0,4 erhöht werden.

Dabei ist dieser Vorveröffentlichung zu entnehmen, daß die Mikrokrater mittels eines gepulsten NdYAG-Lasers auf der Oberfläche von insbesondere mineralischen Fußbodenbelagmaterialien in einer stationären Anlage ausgebildet werden sollen. Demzufolge können nur entsprechend bearbeitetete Beläge bei Neubauten bzw. Neuverlegungen eingesetzt werden und das Gefahrenpotential, das bei bereits verlegten Fußböden besteht, bleibt vorhanden. Außerdem ist es üblich, daß bereits verlegte Fußbodenbeläge nach längeren Zeiträumen und dies ist insbesondere bei Steinfußbodenbelägen der Fall, nachbearbeitet, d.h. abgeschliffen werden, um den optischen Eindruck und dabei insbesondere das Glanzverhalten wieder zu verbessern. Dies führt selbstverständlich dazu, daß die gewünschte Wirkung der Mikrokrater durch zumindest Verringerung der Abmaße in Form und Tiefe, daß der gewünschte rutschhemmende Effekt beseitigt wird.

Desweiteren ist in WO 97/48536 A1 beschrieben, wie mittels Laserstrahlen unterschiedliche Fugenmaterialien und Mörtel aus Fugen zwischen Ziegeln und Steinen mit einer mobilen Einheit entfernt werden können. Die mobile Einheit mit einem Gehäuse kann sowohl manuell, wie auch mit einem Roboter umgesetzt werden. Zum Umsetzen sind am Gehäuse, durch das ein Laserstrahl auf das zu entfernende Fugenmaterial, das sich in Fugen zwischen beispielsweise Ziegeln befindet und wieder entfernt werden soll, in geschützter Form gerichtet wird, Räder vorhanden.

Es ist daher Aufgabe der Erfindung, eine Möglichkeit vorzuschlagen, um bereits verlegte Fußbodenbeläge an ihrer Oberfläche mit einer Struktur zu versehen, die zumindest eine Erhöhung der Rutschhemmung auch bei Vorhandensein eines gleitfördernden Mediums, wie z.B.

Wasser, auf der Oberfläche bewirkt.

Erfindungsgemäß wird diese Aufgabe mit den Merkmalen des Anspruchs 1 für die Vorrichtung und den Merkmalen des Anspruchs 15 für das Verfahren gelöst. Vorteilhafte Ausgestaltungsformen und Weiterbildungen der Erfindung, ergeben sich bei Anwendung der in den untergeordneten Ansprüchen genannten Merkmale.

Die erfindungsgemäße Vorrichtung und das entsprechende Verfahren können bei nahezu beliebigen Fußbodenbelägen, die aus den verschiedensten Materialien bestehen, eingesetzt werden, wobei hierunter nicht nur ebene Fußbodenflächen, sondern auch Treppenstufen zählen, die bekanntermaßen ein höheres Gefahrenpotential darstellen.

Nach der Lehre der Erfindung, wird die Oberflächenstrukturierung unter Verwendung mindestens eines Laserstrahls, der intensitätsgesteuert in mindestens einer Dimension über die zu strukturierende Oberfläche bewegt werden kann, ausgebildet. Dabei wird bei einer solchen Vorrichtung zumindestens ein mobiles Teil verwendet, in dem die Elemente zur Führung und Formung des einen Laserstrahls bzw. mehrerer Laserstrahlen aufgenommen sind.

Erfindungsgemäß können Laserlichtquellen Verwendung finden, die sowohl kontinuierlich, wie auch gepulst betrieben werden. Dabei ist es sicher günstig, einen kontinuierlich betriebenen Laserstrahl zu verwenden, wenn linienförmige Strukturen in den Oberflächen des Fußbodenbelages ausgebildet werden sollen und ein gepulst betriebener Laserstrahl verwendet wird, wenn punktförmige Strukturen ausgebildet werden sollen. Die Auswahl der jeweiligen Laserlichtquelle kann günstigerweise entsprechend dem Fußbodenbelagmaterial und insbesondere unter Berücksichtigung dessen Absorptionseigenschaften für die Wellenlängen des verwendeten Lasers erfolgen.

Neben CO₂-Lasern sind dies z.B. gütegeschaltete Pulslaser, wie ein Nd:YAG-Laser, der bevorzugt diodengepumt ist.

Für die Strahlführung und Formung kann auf aus der Lasertechnik bekannte optische Elemente, wie Spiegelsysteme, Strahlaufweitungsoptiken, Planfeldoptiken, Scanner oder Polygonräder zurückgegriffen werden, wobei diese optischen Elemente bevorzugt so ausgebildet bzw. angeordnet sind, daß eine Regelung insbesondere für die Laserstrahlintensität auf der Fußbodenbelagoberfläche möglich ist. Solche Systeme sind aus der Laserbeschriftung bekannt.

Besonders vorteilhaft ist die Verwendung von Lichtleitfasern zur Übertragung des Laserstrahls bzw. mehrerer Laserstrahlen von einer bzw. mehreren Laserlichtquellen zum Wirkort. Dies ist besonders günstig, wenn die Vorrichtung aus mehreren Teilen besteht und der Teil der Vorrichtung, in dem die Laserlichtquelle mit den für deren Betrieb erforderlichen Zusatzkomponenten, wie z.B. die Kühlung und Stromversorgung, vom im Anspruch 1 erwähnten mobilen Teil der erfindungsgemäßen Vorrichtung getrennt sind. Ganz besonders vorteilhaft wirkt sich eine solche Ausbildung der erfindungsgemäßen Vorrichtung bei der Bearbeitung von Treppenstufen aus, da die Flexibilität und Handhabbarkeit des mobilen Teiles der Vorrichtung, das die Elemente zur Führung und Formung des bzw. der Laserstrahls/-strahlen enthält, sowohl in puncto Masse, wie auch Volumen entsprechend klein ausgebildet werden kann.

Dabei kann dieses mobile Teil über einen eigenen Antrieb verfügen, mit dem es mit definiert vorgebbarer Geschwindigkeit über die zu strukturierende Oberfläche bewegt werden kann, so daß eine Auslenkung des bzw. der Laserstrahls/-strahlen lediglich in einer Dimension ausreicht, um das gewünschte Strukturmuster auf der Oberfläche des Fußbodenbelages auszubilden. Es kann aber auch zusätzlich eine Geschwindigkeitsmessung, beispielsweise mit einem nicht angetriebenen Rad, wie es von Peißler bekannt ist, durchgeführt und das Geschwindigkeitsmeßsignal bei der Steuerung des Laserstrahls berücksichtigt werden. Bei einer solchen Ausbildung der erfindungsgemäßen Vorrichtung kann ein kontinuierlicher Betrieb erreicht werden. Ähnlich sollte auch bei einem manuellen Betrieb ohne eigenen Antrieb des mobilen Teiles verfahren werden.

Mit der Erfindung kann aber auch so verfahren werden, daß bestimmte Oberflächenbereiche nach entsprechender Positionierung des mobilen Teiles nacheinander in sogenannter Schritt für Schritt Verfahrensweise strukturiert werden. Hierbei ist es dann erforderlich, die Ablenkung des Laserstrahls in zwei Dimensionen vorzunehmen. Eine solche Vorgehensweise bietet sich insbesondere dann an, wenn ein entsprechend zu behandelnder Fußbodenbelag aus nahezu gleich dimensionierten Einzelelementen (Platten), die durch Fugen voneinander getrennt sind, strukturiert werden sollen.

Für die Steuerung der Bewegung bzw. der Positionierung des mobilen Teiles können am mobilen Teil der erfindungsgemäßen Vorrichtung ein Leit-, Navigationsund/oder Bildverarbeitungssystem vorhanden sein, wobei diese in Verbindung mit einer elektronischen Datenverarbeitungseinheit betrieben werden können. In einer solchen elektronischen Datenverarbeitungseinheit können entsprechende Angaben über die Dimension, geometrische Gestaltung und des Materials des Fußbodenbelages gespeichert sein und bei der Steuerung der Bewegung des mobilen Teiles der erfindungsgemäßen Vorrichtung und der Laserintensität berücksichtigt werden. Außerdem kann mit Hilfe einer solchen elektronischen Steuerung auch die Form und Dimensionierung der auf der Oberfläche des Fußbodenbelages ausgebildeten Struktur beeinflußt werden. Es ist also ohne weiteres möglich, eine Strukturierung in Form von Mikrokratern, die als Verdrängungsraum für gleitfördernde Medien wirken, in einer Größe auszubilden, die für das menschliche Auge in einem Abstand von mindestens 1 Meter nicht erkennbar ist und dadurch das optische Bild der Oberfläche nahezu nicht beeinflußt wird.

Die Strukturierung muß aber zur Erreichung des gewünschten rutschhemmenden Effektes nicht auf der gesamten Oberfläche des Fußbodenbelages ausgebildet werden, sondern es können strukturierte Bereiche in Form eines Rasters ausgebildet werden, wobei strukturierte Bereiche von unstrukturierten Bereichen getrennt sind. Die Form der strukturierten Bereiche kann dabei beispielsweise quadratisch bzw. kreisförmig sein. Die Abstände zwischen den strukturierten Bereichen sollten jedoch so gewählt werden, daß die Trittsicherheit nahezu so groß ist, wie dies bei einer vollständig strukturierten Oberfläche der Fall wäre. Eine solche Ausbildung führt zur Verringerung der Bearbeitungszeit eines zu strukturierenden Fußbodenbelages.

Die Bearbeitungsgeschwindigkeit kann außerdem erhöht werden, wenn mehrere Laserstrahlen verwendet werden. Dabei ist es aus Kostengründen besonders günstig, den Laserstrahl einer einzigen Laserlichtquelle unter Verwendung von mindestens einem Strahlteiler in mindestens zwei zur Strukturierung verwendbare Laserstrahlen aufgeteilt wird/werden. In jüngster Vergangenheit sind Strahlteiler bekannt geworden, mit denen es möglich ist, einen Laserstrahl, nicht nur in zwei Teilstrahlen sondern in drei Einzelstrahlen bzw. mit Strahlteilersystemen in noch mehr Einzelstrahlen zu teilen. In jedem Fall müssen jedoch die Teilstrahlen gesondert abgelenkt und geformt werden, um die Strukturierung in der gewünschten Form auszubilden.

Neben der nahezu nicht sichtbaren Mikrostrukturierung können aber auch für das menschliche Auge sichtbare Strukturierungen ausgebildet werden, die beispielsweise als regelmäßige Muster oder in Form von vorgebbaren Bilddarstellungen ausgebildet werden können. Solche Bilddarstellungen können z.B. für Werbezwecke genutzt werden. Durch gezielte Beeinflussung der Laserstrahlbearbeitung in bezug auf Intensität und Bearbeitungszeit ist es ohne weiteres möglich, Bilddarstellungen auf der Fußbodenbelagoberfläche zu erhalten, die durch variable Strukturgröße und Strukturtiefe einen dreidimensionalen Effekt vermitteln.

An der erfindungsgemäßen Vorrichtung, sollte zumindest am mobilen Teil mindestens ein Abstandsensor vorhanden sein, der den Abstand, insbesondere für die Fokussierung des Laserstrahls zur zu strukturierenden Oberfläche mißt und dieses Meßsignal für die Strahlführung und -formung und/oder Steuerung der Laserleistung benutzt wird.

Dieser Abstandsensor oder mindestens ein zusätzlicher Abstandsensor kann außerdem benutzt werden, um die Bewegung des mobilen Teiles der erfindungsgemäßen Vorrichtung zu überwachen bzw. zu steuern. In diesem Falle wird mit solchen Abstandsensoren der Abstand zu Wänden, Gebäudeteilen (z.B. Säulen) oder anderen auf einem Fußboden angeordneten Gegenständen kontinuierlich oder diskontinuierlich gemessen wird. Der gemessene tatsächliche Abstand kann mit den gespeicherten Werten verglichen und für die Navigation und Steuerung der Bewegung benutzt werden.

Mindestens ein Abstandsmesser kann aber auch für eine Notabschaltung verwendet werden, wenn z.B. das mobile Teil um einen bestimmten Winkel gekippt wird, so daß eine Gefährdung für in der Umgebung befindliche Personen und Gegenstände auftreten kann. In diesem Fall kann bei Überschreitung eines vorgegebenen Grenzwertes, der mit einem solchen Abstandsmesser gemessen wird, die Laserlichtquelle abgeschaltet werden.

Zu diesem Zweck können aber auch andere zusätzliche Sensoren bzw. Schalter, wie z.B. Neigungssensoren verwendet werden. Sicherheitsschalter können aber auch an einer Schutzsicherung, die den eigentlichen Bearbeitungsbereich umschließt, angebracht sein, die einen Betrieb bei geöffneter bzw. entfernter Schutzeinrichtung verhindern.

Wird lediglich ein oder werden lediglich zwei Abstandsenor(en) verwendet, sollte zumindestens einer um mindestens eine Achse drehbar sein und zusätzlich der entsprechende Winkel mittels eines herkömmlichen Drehwinkelgebers bestimmt und bei der Auswertung des Abstandssignales berücksichtigt werden.

Da es insbesondere bei der Strukturierung von mineralischen Materialien, wie die verschiedensten Natursteine, dazu kommt, daß feste Partikel ausbrechen und mit beträchtlicher Beschleunigung herausgeschleudert werden, ist es günstig, am mobilen Teil der erfindungsgemäßen Vorrichtung eine Schutzvorrichtung für die optischen Elemente zur Führung und Formung des/der Laserstrahls/-strahlen in Strahlrichtung anzuordnen. Dabei können für die jeweils verwendete Laserstrahlung transparente Schutzscheiben, die bevorzugt austauschbar sind, verwendet werden. Günstig kann es auch sein, eine Schutzscheibe zu verwenden, in der ein Längsschnitt vorhanden ist, durch den der eindimensional ausgelenkte Laserstrahl ungehindert, d.h. ohne Transmissionsverluste, auf die zu strukturierende Oberfläche gerichtet wird. Dabei sollte die Dicke der Schutzscheibe und die Breite eines solchen Längsschnittes so dimensioniert werden, daß keine Partikel des zu strukturierenden Fußbodenbelagmaterials die optischen Elemente erreichen und beschädigen können.

Eine andere Möglichkeit zur Erreichung des Schutzes dieser Elemente besteht darin, daß eine Folie verwendet wird, die durch Auf- bzw. Abwicklung auf bzw. von Rollen kontinuierlich transportiert wird. Eine solche transparente Folie ist ausreichend fest und ihre Flexibilität sichert, daß die kinetische Energie der Partikel aufgenommen wird und ein Durchschlagen der Folie ausgeschlossen ist. Die Verwendung einer solchen kontinuierlich bewegten Folie hat außerdem den Vorteil, daß das Transmissionsverhalten nahezu konstant bleibt und eine Beeinträchtigung durch Kratzer bzw. Verschmutzung, wie dies bei transparenten Schutzscheiben der Fall sein kann, ausgeschlossen wird.

Allein oder zusätzlich kann auch ein Absaugsystem für diese Partikel verwendet werden, wobei hier z.B. ein sogenanntes Cross-Jet-Saugsystem verwendet werden kann.

Vorteilhaft kann es auch sein, in dem abgeschlossenen Bereich, in dem die optischen Elemente zur Führung und Formung von Laserstrahlen angeordnet sind,einen Druck einzustellen, der oberhalb des Umgebungsdruckes liegt, um durch eindringenden Staub bedingte Verschmutzungen zumindest zu behindern.

Die Erfindung kann außerdem weiter gebildet werden, in dem ein gesondertes oder das bereits für die Bewegungssteuerung des mobilen Teiles der Vorrichtung erwähnte Bildverarbeitungssystem vorhanden bzw. verwendet wird, um die mittels der Laserbearbeitung ausgebildete Struktur zu erfassen und eine entsprechende Gütekontrolle vorzunehmen.

Insbesondere bei relativ stark reflektierenden Materialien kann es zur Erhöhung der Bearbeitungsgeschwindigkeit sinnvoll sein, eine solche Oberfläche vor der Ausbildung der Strukturen mit einer Schicht eines Mediums höherer Absorption, für die verwendete Laserstrahlung, zu versehen. Dabei können Folien, flüssige oder pastöse Mittel temporär auf den zu strukturierenden Fußbodenbelag in relativ kleiner Schichtdicke aufgebracht werden.

Nicht nur in diesem Fall ist es vorteilhaft, die erfindungsgemäße Vorrichtung mit einer integrierten Reinigungsvorrichtung zu versehen, mit der auch die Partikel, die aus dem Fußbodenbelagmaterial herausgebrochen sind, entfernt werden können.

Die Reinigung kann durch Verwendung von flüssigen Reinigungsmitteln in Verbindung mit herkömmlichen mechanischen Elementen, wie Bürsten oder Schwämmen, aber auch allein bzw. in Kombination mit der Naßreinigung durch eine entsprechende Saugvorrichtung, die wiederum kombiniert mit dem bereits erwähnten Chross-Jet-System wirken kann, erreicht werden.

Bei einer Naßreinigung kann es vorteilhaft sein, die Wärmeenergie des Kühlwassers und/oder der Kühlluft der Laserlichtquelle auszunutzen, wobei hierfür entweder bereits vorhandene Wärmetauscher oder zusätzlich anzubringende Wärmetauscher verwendet werden sollen.

Zur Prozeßkontrolle kann am mobilen Teil der erfindungsgemäßen Vorrichtung eine Plasmaüberwachung vorhanden sein, mit der die Temperatur und/oder die Größe des durch den Laserstrahl an der Oberfläche ausgebildeten Plasmas gemessen und für die Steuerung insbesondere der Intensität des Laserstrahles benutzt werden.

Neben den Laserparametern, wie Laserleistung, Pulsenergie, -frequenz und/oder die Laserstrahlparameter, wie Strahlaufweitung, Brennweite, Wirkfleckdurchmeser können allein oder in Verbindung mit der Bearbeitungsgeschwindigkeit (Zeilenvorschub, Vorschubgeschwindigkeit der Vorrichtung eingestellt bzw. geregelt werden. Da es insbesondere bei der Bearbeitung von Natur- bzw. Kunststeinen zu Schwankungen der Reflexions- bzw. Absorptionseigenschaften über die zu strukturierende Oberfläche kommt, ist es günstig, ein zusätzliches optisches Meßsystem am mobilen Teil der Erfindungsgemäßen Vorrichtung vorzusehen, mit dem die Reflexion bzw. Absorption ortsaufgelöst bestimmt und bei der Steuerung der Intensität des bzw. der Laserstrahls/-strahlen berücksichtigt wird.

Nachfolgend soll die Erfindung an Beispielen näher erläutert werden.

Dabei zeigen:
- Figur 1: ein Beispiel einer erfindungsgemäßen Vorrichtung, die besonders für einen diskontinuierlichen Betrieb geeignet ist;
- Figur 2: ein Beispiel einer erfindungsgemäßen Vorrichtung, die besonders für einen kontinuierlichen Betrieb geeignet ist;
- Figur 3: ein Leitstrahlsystem für die Steuerung der Bewegung einer erfindungsgemäßen Vorrichtung;
- Figur 4: ein mobiles Teil, für die Ausbildung von Strukturierungen auf Treppenstufen;
- Figur 5: eine schematische Darstellung für eine vektorielle Ablenkung von Laserstrahlen und
- Figur 6: eine schematische Darstellung für eine Rasterablenkgung von Laserstrahlen.

### Beispiel 1

Dabei soll die erfindungsgemäße Vorrichtung als mobile Anlage zur Erhöhung der Rutschfestigkeit polierter Natursteinoberflächen verwendet werden.

Solche Fußböden sind in den Eingangsbereichen von beispielsweise Banken, öffentlichen Gebäuden, Flughäfen, Hotels u.a.m. aus flächigen Einzelplatten in Formaten von 300 * 300 mm verlegt. Ein übliches Material ist z.B. Granit.

Eine solche Anlage kann aus mehreren Komponenten, wie mindestens einem Gestell 19, ggf. mit Fahrwerk 11 und elektrischem Antrieb, Laser 5, Galvoscanner 2, Kühlung 17, Stromversorgung 16, einer x-y-Verschiebeeinheit 9, Strahlenschutzeinheit 13, einer Schutzvorrichtung für die Optik, einem optischen Meßsystem, einer Steuerung 15 für Laser und x-y-Verschiebeeinheit sowie einer CCD-Kamera 7 mit Monitor bestehen.

Als Fahrwerk kann ein dreirädriges mit zwei ungelenkten Rädern und einem lenkbaren Rad, von denen günstigerweise mindestens ein Rad, bevorzugt das Lenkbare mit einem Elektromotor angetrieben werden kann, verwendet werden. Zur Lenkung kann eine Deichsel, ähnlich wie bei einem Deichselhubwagen verwendet werden. Der Antrieb dient zur Unterstützung der Positionierung und kann allein bzw. gemeinsam mit der Lenkung mittels einer speicherprogrammierbaren Steuerung manipuliert werden.

Laser 5 und Galvoscanner 2 sind hier miteinander verbunden und auf einer x-y-Verschiebeeinheit 9 montiert.

Es wird hier ein cw-diodengepumpter q-switch Nd:YAG Festkörperlaser und ein x-y-Galvoscanner mit einer Planfeldoptik und regelbarer Zoom-Optik (Brennweite der Optik 300 mm) verwendet, wobei diese Regelung vorteilhaft in Abhängigkeit des gemessenen Abstandes der Optik zur Fußbodenoberfläche erfolgt, wobei der Abstand bevorzugt optisch gemessen wird. Das Scanfeld ist bei diesem Beispiel 150 * 150 mm groß. Der Laserstrahl wird mit der Optik auf die Fußbodenoberfläche fokussiert.

Die Laser- und Scannerparameter (z.B. Stromstärke, Pulsfolgefrequenz, Scanngeschwindigkeit) werden entsprechend des Materials, in diesem Fall für die Granitart mittels der Steuerung automatisch eingestellt bzw. manuell ausgewählt, wobei die jeweiligen, vorabbestimmten Parameter in der Speichereinheit der speicherprogrammierbaren Steuerung hinterlegt sind. Feststehende Parameter sind der Punktabstand von 0,4 mm auf der Fußbodenoberfläche und die Größe des Scanfeldes.

Die x-y-Verschiebeeinheit 9 ist bedingt durch die Scanfeldgröße so ausgebildet, daß für die Bearbeitung einer Einzelfliese ein Umsetzen in vier verschiedene Positionen erreicht werden kann, ohne daß eine Überlappung auftritt, so daß der konstante Abstand der Punkte (Mikrokrater) auch zwischen den jeweils einzeln bearbeiteten Flächen einer Granitfliese eingehalten wird.

Eine verwendbare Strahlenschutzvorrichtung 13 verfügt über ein nach unten offenes Gehäuse, an dessen unteren Kanten elastische Lippen angebracht sind. Das Gehäuse kann in vertikaler Richtung verschiebbar am Gestell 19 angeordnet werden. Vor der Bearbeitung wird das Gehäuse bis zum Boden abgesenkt und überdeckt den gesamten Bearbeitungsbereich (300 * 300 mm). Das Gehäuse ist mit einem Sicherheitsschalter verbunden, der eine Freigabe des Laserstrahls erst bei abgesenktem Gehäuse erlaubt. Nach der Bearbeitung einer einzelnen Granitfliese kann das Gehäuse angehoben und nach Neupositionierung der Vorrichtung wieder abgesenkt werden, so daß ein größtmöglicher Laserstrahlenschutz (Klasse 1) erreichbar ist.

Mit der CCD-Kamera 7 kann die Positionierung und Überwachung der Bearbeitung erleichtert bzw. ermöglicht werden. Dabei erfolgt mit bekannten Mitteln der Bildverarbeitung eine Ausrichtung in bezug auf die Kanten der Einzelfliesen. Für die Überwachung und ggf. die Positionierung kann ein Bildschirm verwendet werden. Im letzten Fall können für die Fliesenkanten entsprechende vorgegebene Linien auf den Bildschirm eingeblendet werden, die in Überdeckung mit den tatsächlichen Bildpunkten der Fliesenkanten gebracht werden können.

Als Schutzvorrichtung für die Optik kann ein austauschbares Schutzglas in Verbindung mit einem Cross-Jet-Saugsystem verwendet werden, mit denen die optischen Elemente vor den Prozeßabprodukten geschützt werden können und der Verschleiß des Schutzglases minimiert werden kann.

Bei diesem Beispiel erfolgt die Bearbeitung diskontinuierlich bei den einzelnen Fliesen, nach entsprechender Positionierung und Weiterbewegung.

Es ist möglich gleichmäßige Muster im bereits genannten Abstandsraster 0,4 mm mit Kraterdurchmessern zwischen 100 bis 400 µm, wobei die Tiefe der Strukturen maximal halb so groß sind, zu erzeugen.

Es können aber auch sichtbare Strukturen mit optischen Effekten oder als Informationsträger ausgebildet werden, wobei dann die Abmaße der Einzelkrater größer bzw. variabel sein können.

### Beispiel 2:

Hierbei sollen polierte Natursteinoberflächen, insbesondere aus Granit mit rutschhemmenden Strukturen versehen werden, wobei es sich hierbei bevorzugt um Treppenstufen handeln soll.

Eine solche Vorrichtung soll ein transportables Gestell aufweisen, auf dem Laser, Kühlung und Stromversorgung angeordnet sind. Desweiteren können eine Steuerung der selbstragenden Einheit und des Lasers, eine taktile Abtastung der Treppenstufenkante und ein Optikschutz verwendet werden.

Außerdem ist eine selbstfahrende Einheit mit Scannerkopf, als mobiler Teil vorhanden, wobei hier bevorzugt vier Räder mit einem Elektroantrieb verwendet werden können. Die Räder können schräg zur Fahrtrichtung ausgerichtet sein, um ein Andrücken der taktilen Kantenabtastung zu erreichen. Die beiden der Treppenkante am nächsten liegenden Räder können angetrieben und um einen festen Winkel zur Fahrtrichtung verdreht sein.

Die beiden anderen Räder können frei beweglich befestigt sein.

Auf dem Fahrwerk mit den Rädern ist der Galvoscannerkopf befestigt. Die Strahlübertragung erfolgt über Lichtleitfaser und der Scanner führt die Bewegung des Laserstrahles orthogonal zur Fahrtrichtung aus, so daß die Struktur in zwei Dimensionen auf der Oberfläche der Treppenstufe ausgebildet werden kann, wenn sich das Fahrwerk parallel zur Treppenstufenkante bewegt.

Außerdem ist ein Meßrad zur Bestimmung der Antriebsgeschwindigkeit vorhanden und das Geschwindigkeitsmeßsignal kann für die Steuerung bzw. Regelung von Laser und Scanner (Scangeschwindigkeit und Pulsfolgefrquenz) benutzt werden. Dadurch kann z.B. ein konstanter Punktabstand im Raster erreicht werden.

Mit der taktilen Kantenabtastung wird der mobile Teil parallel zur Treppenkante bewegt und es können verschiedene Treppenformen bearbeitet werden.

Es werden wieder ein Glavoscanner mit Planfeldoptik (Brennweite der Optik 160 mm) verwendet. Die Größe des Scanfeldes beträgt 100 * 100 mm, so daß zumindest der besonders gefährliche Kantenbereich einer Treppenstufe in einem Arbeitsgang strukturiert werden kann.

Die Breite der Bearbeitungsspur kann auch variabel eingestellt werden.

Es kann wieder ein cw-diodengepumpter q-switch Nd:YAG-Festkörperlaser in Verbindung mit einer speicherprogrammierbaren Steuerung, wie sie bereits beim Beispiel 1 beschrieben wurde, verwendet werden.

Für den Schutz der optischen Elemente kann wieder ein austauschbares Schutzglas und für den Strahlenschutz eine Kapselung verwendet werden.

Mit einer solchen Vorrichtung kann die Bearbeitung kontinuierlich erfolgen.

Es kann wieder ein gleichmäßiges Punktraster mit den Raster- und Strukturmaßen nach Beispiel 1 erzeugt werden. Die Breite einer Bearbeitungsspur kann z.B. 60 mm betragen und in einem Abstand von ca. 5 mm von der Treppenstufenkante ausgebildet werden, was ggf. für die gewünschte Rutschhemmung durch Ausbildung lediglich einer solchen Spur je Treppenstufe ausreichend sein kann.

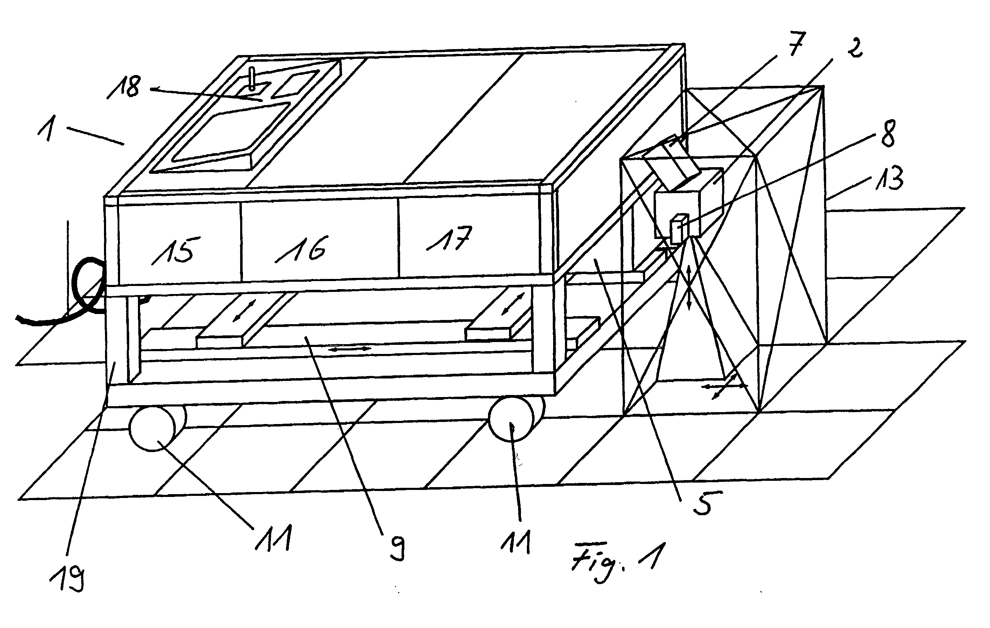

Mit Figur 1 soll schematisch ein Beispiel für eine Vorrichtung gezeigt und anschaulich gemacht werden, die insbesondere für eine diskontinuierliche Bearbeitung von Fußbodenbelägen geeignet ist.

Bei diesem Beispiel sind die wesentlichen erforderlichen Komponenten in einem mobilen Teil 1 untergebracht. Dabei werden sie von einem rahmenförmigen Gestell 19 gehalten, an dem ein Fahrwerk 11, mit hier vier Rädern, angebracht ist. Außerdem sind im Gestell 19 die Steuerung 15, die Stromversorgung 16, die Kühlung 17 für den Laser 5 (hier nicht dargestellt) und ein manuell bedienbares Pult 18 aufgenommen. Außerdem ist eine Energiezufuhrleitung 14 vorhanden, die entsprechend der erforderlichen Mobilität flexibel ausgebildet ist.

Am Gestell 19 ist außerdem ein Verschiebeelement 9 angebracht, das bei diesem Beispiel eine Verschiebung in zwei orthogonal zueinander ausgerichteten Achsen ermöglicht, wie dies mit den Doppelpfeilen angedeutet ist. Auf dem Verschiebeelement 9 sind der Laser 5, und ein Galvoscankopf 2, als Strahlführungselemente sowie eine elektronische Kamera 7, deren Signale mittels herkömmlicher Bildverarbeitung ausgewertet werden können, befestigt, so daß sie gemeinsam mittels des Verschiebeelementes 9 in x-y-Richtung verschoben und z.B. entsprechend dem Raster von bereits verlegten Einzelplatten eines Fußbodenbelages positioniert werden können.

Mit einer solchen Vorrichtung wird das mobile Teil 1 Schritt für Schritt bewegt und nach erfolgreicher Bearbeitung einer Einzelplatte und Erreichen einer benachbarten Einzelplatte, wird das Verschiebeelement 9 so manipuliert, daß eine Positionierung erreicht wird, mit der die jeweilige Einzelplatte in Gänze oder gezielt partiell bearbeitet werden kann.

Bei diesem Beispiel ist ein Abstandssensor 8 am Galvoscankopf 2, als Strahlführungselement, vorhanden, mit dem der jeweilige Abstand zum zu bearbeitenden Einzelplattenelement bestimmt wird. Dabei dient dieses Abstandsmeßsignal in erster Linie zur Beeinflussung einer hier nicht dargestellten Strahlformungseinheit, mit der die Fokussierung des Laserstrahls entsprechend des tatsächlichen Abstandes beeinflußt werden kann. Dabei kann das Abstandsmeßsignal während der Bewegung des Verschiebeelementes 9 gemessen, zwischengespeichert und nachfolgend bei der Bearbeitung der Einzelplatte mit der Steuerung 15 berücksichtigt werden.

Als Strahlformungseinheit kann z.B. eine herkömmliche Vario-Zoom-Optik eingesetzt werden, die mit der Steuerung 15 verbunden ist.

Der eigentliche Bearbeitungsbereich, bei dem hier gezeigten Beispiel, die Fläche, die von einem plattenförmigen Einzelelement eines Fußbodenbelages eingenommen wird, sollte mit einer Schutzeinrichtung 13 umgeben sein, so daß eine Gefährdung durch den Laserstrahl oder aus dem Fußbodenbelag herausplatzender Teile vermieden werden kann.

An einer solchen Laserschutzeinrichtung 13 sollte günstigerweise ein hier nicht dargestellter Sicherheitskontaktschalter oder ein entsprechender Sensor vorhanden sein, mit dem ein Betrieb bei teilweise bzw. vollständig entfernter Laserschutzeinrichtung 13 unmöglich gemacht wird.

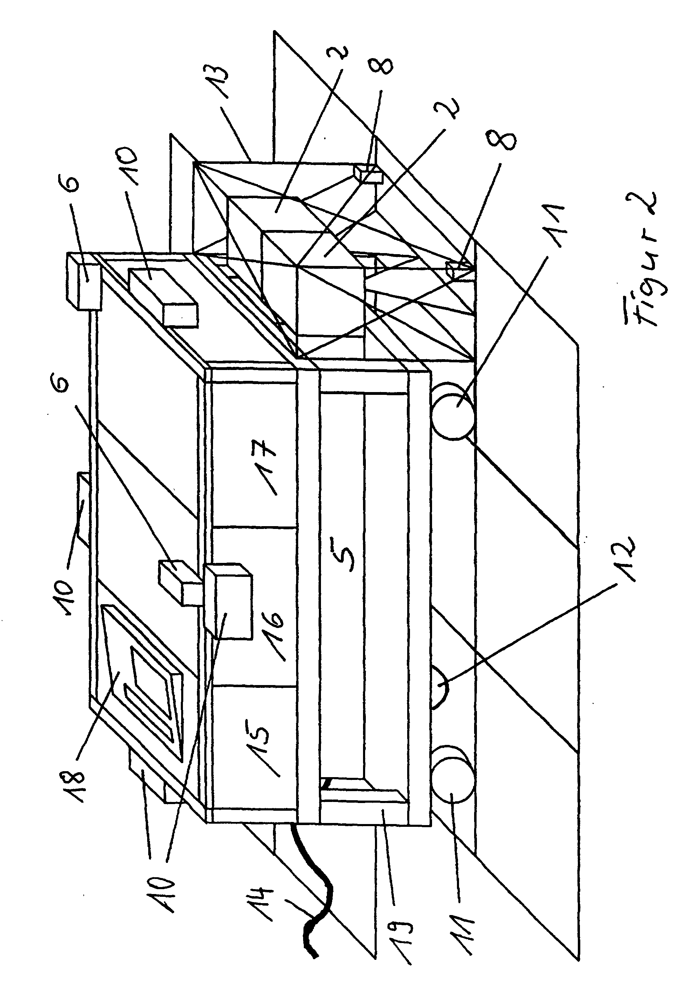

Bei dem in Figur 2 gezeigten Beispiel einer erfindungsgemäßen Vorrichtung, besteht das mobile Teil 1 wieder aus einem Gestell 19, in dem die Steuerung 15, die Stromversorgung 16, die Kühlung 17 für den Laser 5 aufgenommen sind. Bei diesem Beispiel sind jedoch die Laserlichtquelle 5 und die Elemente für die Strahlformung Strahlführung, hier zwei nebeneinander angeordnete Galvoscanköpfe 2 und die Laserschutzeinrichtung 13 starr befestigt.

Da diese Teile unbeweglich am Gestell 19 befestigt sind, sind hier zwei Abstandssensoren 8 in einem Abstand zueinander ebenfalls starr angeordnet. Mit den zwei in einem Abstand zueinander angeordneten Abstandssensoren 8 kann auch eine in geneigter Stellung zur horizontalen verlegte Einzelplatte eines Fußbodenbelages ohne weiteres bearbeitet werden, da der entsprechende Neigungswinkel mit den beiden Abstandssensoren 8 bestimmt werden kann, wobei auch eine Neigung in zwei orthogonal zueinander liegenden Richtungen erkannt wird, da das mobile Teil 1 entlang der einen dieser beiden Achsen, bewegt wird.

Auch bei diesem Beispiel ist am Gestell 19 ein aus vier Rädern bestehendes Fahrwerk 11 verwendet worden, wobei die einzelnen Räder des Fahrwerkes 11 einzeln angetrieben werden sollten. Für die Bestimmung der Position und auch für die Steuerung der Laserstrahlen wird ein nicht angetriebenes Meßrad 12 verwendet. Damit kann die jeweilige Geschwindigkeit schlupffrei gemessen werden.

Bei dem in Figur 2 gezeigten Beispiel sind an den jeweiligen Außenseiten des mobilen Teiles 1 Kollisionsschutzeinrichtungen 10 vorhanden, mit denen verhindert werden kann, daß das mobile Teil 1 Wände oder andere in einem Raum plazierte Gegenstände berührt oder gegebenenfalls beschädigt. Für eine solche Kollisionsschutzeinrichtung 10 kann beispielsweise ein Laserflächenradar eingesetzt werden.

Außerdem werden bei diesem Beispiel zwei Empfänger 6 für Laserleitstrahlen verwendet, deren Empfangsachse orthogonal zueinander ausgerichtet ist.

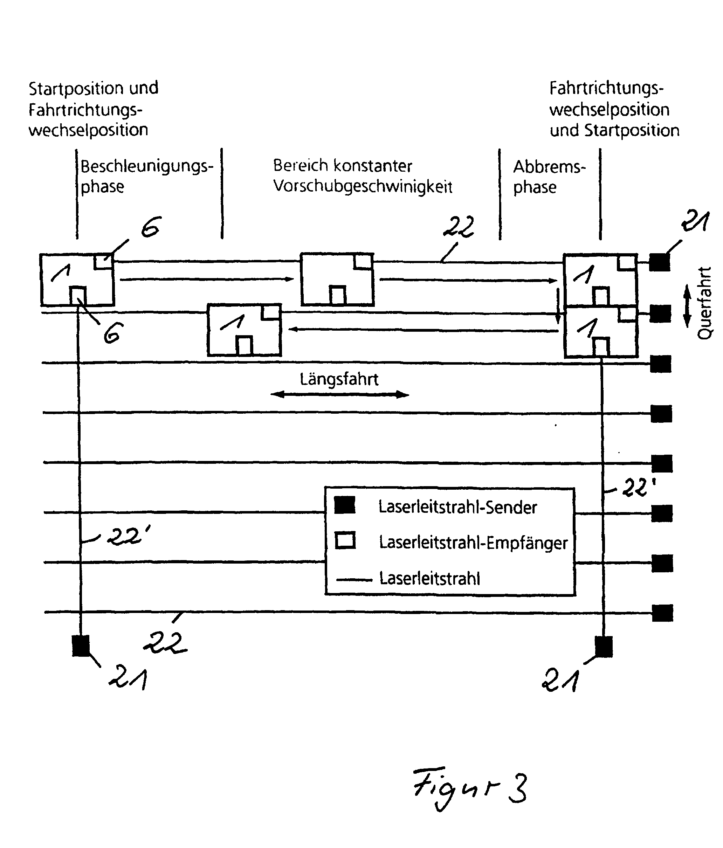

Mit diesem Empfangssystem 6 kann eine gezielt gesteuerte Bewegung des mobilen Teiles 1, unter Verwendung von Laserleitstrahlen erreicht werden, wie dies mit Figur 3 angedeutet ist.

Dabei können in einem Raum mehrere Laserleitstrahlsender 21 angeordnet werden und das mobile Teil 1 kann entsprechend parallel zu diesen Laserleitstrahlen bewegt werden. So ist in Figur 3 eine Anzahl von Laserleitstrahlsendern 21 in einer Reihe angeordnet, die parallel zueinander ausgerichtete Laserleitstrahlen 22 für eine Längsfahrt aussenden. Orthogonal hierzu sind an den äußeren Rändern der zu bearbeitenden Fußbodenfläche jeweils ein weiterer Laserleitstrahlsender 21 angeordnet, die jeweils einen orthogonal zu den anderen Laserleitstrahlen 22 ausgerichteten Laserleitstrahl 22' sendet, mit dem an den jeweils äußeren zu bearbeitenden Fußbodenflächen ein Anhalten und eine entsprechende Bewegung, wie sie mit dem Doppelpfeil "Querfahrt" angedeutet ist, eingeleitet wird und diese Querfahrt durch Erkennen des entsprechenden Laserleitstrahlempfängers, des nachfolgenden parallelen Laserleitstrahles 22 beendet und das mobile Teil 1 dann in die entgegengesetzte Richtung, eine Längsfahrt vollzieht.

Selbstverständlich können auch andere Leitstrahlsysteme, anstelle der Laserleitstrahlen Verwendung finden.

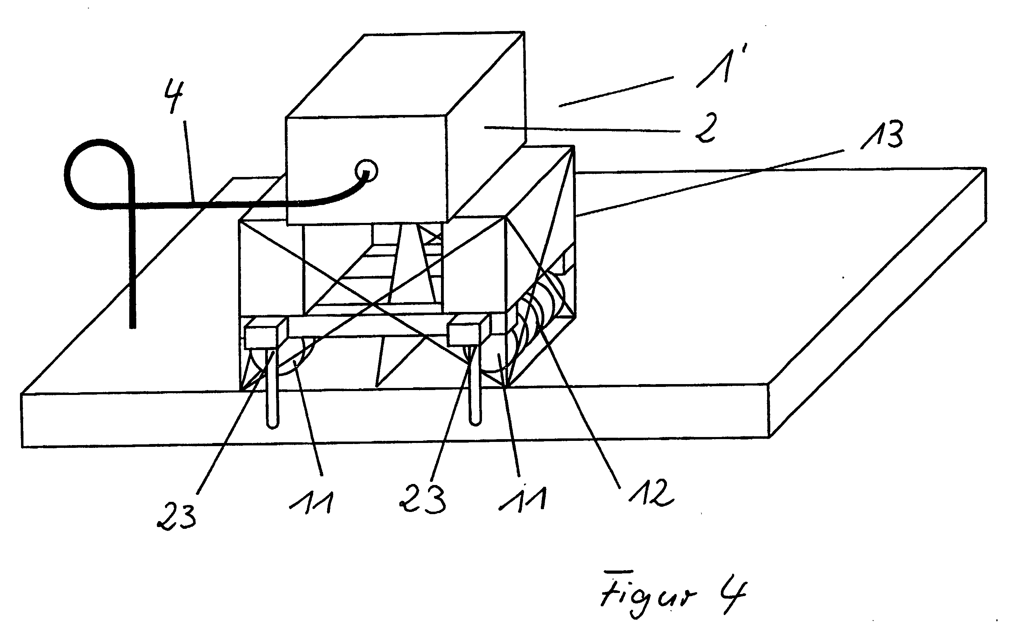

In Figur 4 ist ein Beispiel eines mobilen Teiles 1' dargestellt, das insbesondere für die Bearbeitung von Treppenstufen geeignet ist. Hierbei ist das mobile Teil 1' der Vorrichtung getrennt von der Laserlichtquelle 5 angeordnet und der Laserstrahl wird über eine Lichtleitfaser 4 zum mobilen Teil 1' geführt. Im mobilen Teil 1' sind Elemente zur Strahlführung und Strahlformung, wie z.B. ein Galvoscankopf 2 aufgenommen, mit denen die gewünschte Strukturierung auf der Oberfläche einer Treppenstufe ausgebildet werden kann.

An dem mobilen Teil 1' ist wiederum ein Fahrwerk 11, hier mit drei einzelnen Rädern, von denen mindestens eines angetrieben wird, vorhanden. Da die Bearbeitung einer solchen Treppenstufe bevorzugt kontinuierlich erfolgen soll, ist ein nicht angetriebenes Meßrad 12 vorhanden, mit dem die Bewegungsgeschwindigkeit erfaßt und bei der Steuerung des Laserstrahles berücksichtigt werden kann.

Das mobile Teil 1' ist im kritischen Bearbeitungsbereich wieder mit einer Laserschutzeinrichtung 13 versehen, mit der die Umgebung geschützt werden kann.

Außerdem sind am mobilen Teil 1' zwei Anschlagsrollen 23 vorhanden, die so ausgebildet und dimensioniert sind, daß sie eine Führung an der Vorderkante der Treppenstufe bilden. Da gerade der vordere Bereich einer Treppenstufe in bezug auf die Rutschfestigkeit kritisch ist, genügt es, wenn das mobile Teil 1' für die Ausbildung der Strukturierung einmal über die gesamte Breite der Treppenstufe geführt und in diesem Bereich die Strukturierung mit den Mikrokratern ausgebildet wird, so daß Bewegungsrichtungsänderungen nicht erforderlich sind.

Da die beiden Anschlagsrollen 23 eine sichere Führung an der Vorderkante an der Treppenstufe darstellen, kann es günstig sein, zumindest eines der Räder des Fahrwerkes 11 in einem leichten Winkel zur vorderen Kante der Treppenstufe anzustellen, so daß eine Kraftwirkung hervorgerufen wird, die sichert, daß die beiden Anschlagsrollen 23 ständig im Kontakt zur vorderen Kante der Treppenstufe bleiben.

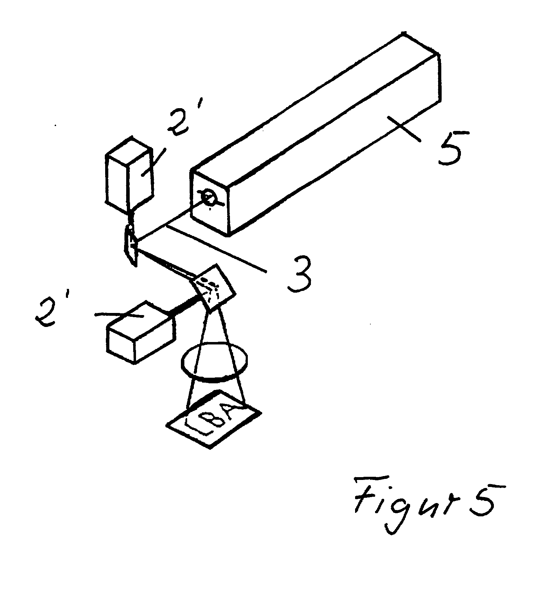

In der Figur 5 ist schematisch ein Aufbau dargestellt, wie mit dem sogenannten Vektorverfahren die Ablenkung des Laserstrahles erreicht werden kann. Hierzu wird der Laserstrahl 3 einer Laserlichtquelle 5 über zwei orthogonal zueinander verschwenkbare Laserscannerspiegel 2' auf die zu bearbeitende Oberfläche gerichtet, wobei durch die Kombination der Spiegeldrehungen jeder beliebige Punkt eines vorgegebenen Areals erreicht werden und an diesen Punkten ein entsprechender Mikrokrater ausgebildet werden kann. Dabei sollte eine Synchronisation der Drehbewegungen der Scannerspiegel 2' mit der Pulsfrequenz einer gepulsten Laserlichtquelle 5 erfolgen. Mit einem solchen Vektorverfahren können gezielt Mikrokrater in Spalten- und Reihenanordnung, aber auch in willkürlich gewählter Anordnung erzeugt werden, wobei ohne weiteres auch zwei- und dreidimensionale Bilddarstellungen bei einer entsprechenden Strukturierung erhalten werden können.

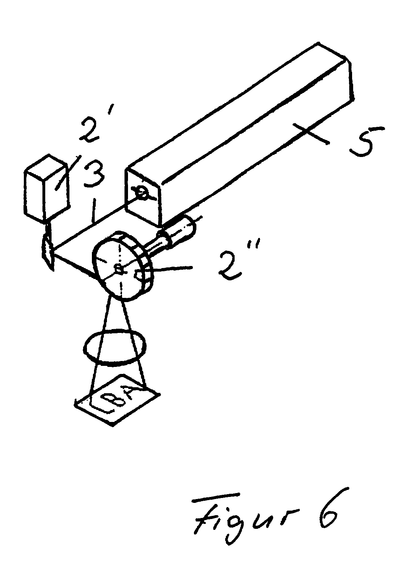

Für einen kontinuierlichen Betrieb bietet sich das Rasterverfahren für die entsprechende Strahlablenkung an, wobei eine Möglichkeit mit Figur 6 dargestellt ist. Bei dem hier gezeigten Beispiel wird der Laserstrahl 3 einer Laserlichtquelle 5 wieder mit einem drehbaren Laserscannerspiegel 2' abgelenkt und auf ein sich drehendes Polygonrad 2'' gerichtet, von dessen einzelnen reflektierend ausgebildeten Flächen der Laserstrahl intermittierend auf die zu bearbeitende Oberfläche gerichtet wird, wobei ein Synchronisierung von Pulsfrequenz der Laserlichtquelle 5 mit der Drehgeschwindigkeit des Polygonrades 2'' unter Berücksichtigung des jeweiligen Drehwinkels des Scannerspiegels 2' und des Polygonrades 2'' erfolgen sollte.

## Patentansprüche

1. Vorrichtung zur Oberflächenstrukturierung von verlegten Fußbodenbelägen, mit mindestens einem Laserstrahl, der intensitätsgesteuert mindestens zweidimensional über die zu strukturierende Oberfläche bewegbar ist,
**dadurch gekennzeichnet,**
**daß** die Elemente zur Führung (2) und Formung des/der Lasertrahles/Laserstrahlen (3) auf einem in zwei orthogonal zueinander ausgerichteten Achsen verschiebbaren Element (9) angeordnet sind und das verschiebbare Element (9) in einem mobilen Teil (1) aufgenommen ist.

2. Vorrichtung nach Anspruch 1,
**dadurch gekennzeichnet, daß** mindestens ein Abstandsensor (8) am mobilen Teil (1) der Vorrichtung vorhanden ist.

3. Vorrichtung nach Anspruch 1 oder 2,
**dadurch gekennzeichnet, daß** zwischen der zu strukturierenden Oberfläche und optischen Elementen zur Führung (2) und Formung des/der Laserstrahls/-strahlen (3) in Strahlrichtung eine für die verwendete Laserstrahlung transparente Schutzvorrichtung angeordnet ist.

4. Vorrichtung nach einem der Ansprüche 1 bis 3,
**dadurch gekennzeichnet, daß** die Schutzvorrichtung eine austauschbare Schutzscheibe, eine mit einem Längsschnitt versehene Schutzscheibe, eine Folie, ein Cross-Jet-System und/oder ein Absaugsystem ist.

5. Vorrichtung nach einem der Ansprüche 1 bis 4,
**dadurch gekennzeichnet, daß** die Übertragung des/der Laserstrahls/-strahlen (3) zumindest teilweise über Lichtleitfaser (4) erfolgt.

6. Vorrichtung nach einem der Ansprüche 1 bis 5,
**dadurch gekennzeichnet, daß** der/die Laserstrahl/-strahlen (3) und/oder der mobile Teil (1) der Vorrichtung gesteuert über die zu strukturierende Oberfläche führ- bzw. bewegbar ist/sind.

7. Vorrichtung nach einem der Ansprüche 1 bis 6,
**dadurch gekennzeichnet, daß** der/die Laserstrahl/-strahlen (3) in Abhängigkeit der Geschwindigkeit oder der Position des mobilen Teiles (1) der Vorrichtung gesteuert ist.

8. Vorrichtung nach einem der Ansprüche 1 bis 7,
**dadurch gekennzeichnet, daß** der Strahl (3) einer Laserlichtquelle (5) mittels mindestens eines Strahlteilers in mindestens zwei zur Strukturierung verwendbare Laserstrahlen aufteilbar ist.

9. Vorrichtung nach einem der Ansprüche 1 bis 8,
**dadurch gekennzeichnet, daß** die Laserlichtquelle (5) ein gepulster Laser ist.

10. Vorrichtung nach einem der Ansprüche 1 bis 8,
**dadurch gekennzeichnet, daß** die Strahlübertragung mittels Spiegelsystem (2) und/oder Lichtleitfaser (4) erfolgt.

11. Vorrichtung nach einem der Ansprüche 1 bis 10,
**dadurch gekennzeichnet, daß** zur Steuerung der Bewegung/Positionierung des mobilen Teiles (1) der Vorrichtung ein Leit-, Navigations- und/oder Bildverarbeitungssystem (6, 7) vorhanden ist/sind.

12. Vorrichtung nach einem der Ansprüche 1 bis 11,
**dadurch gekennzeichnet, daß** ein die ausgebildete Struktur erfassendes Bildverarbeitungssystem (7) vorhanden ist.

13. Vorrichtung nach einem der Ansprüche 1 bis 12,
**dadurch gekennzeichnet, daß** eine die strukturierte Oberfläche reinigende Vorrichtung integriert ist.

14. Vorrichtung nach einem der Ansprüche 1 bis 13,
**dadurch gekennzeichnet, daß** am mobilen Teil (1) mindestens ein Kollisionsschutz-System (10) vorhanden ist.

15. Verfahren zur Oberflächenstrukturierung von verlegten Fußbodenbelägen mit mindestens einem Laserstrahl, der intensitätsgesteuert mindestens zweidimensional über die zu strukturierende Oberfläche bewegbar ist, wobei
ein mobiles Teil (1) einer Vorrichtung definiert über die zu strukturierende Oberfläche bewegt oder dort positioniert wird und der/die Laserstrahl(en) (3) in Abhängigkeit der Geschwindigkeit oder Position gesteuert wird
**dadurch gekennzeichnet, daß** der mobiles Teil der Vorrichtung mit einem daran in zwei orthogonal zueinander ausgerichteten Achsen verschiebbaren Element (9) angeordnet ist, in dem zumindest die Elemente zur Führung (2) und Formung des Laserstrahls aufgenomen sind.

16. Verfahren nach Anspruch 15,
**dadurch gekennzeichnet, daß** die Laserleistung und/oder die Fokussierung auf die zu strukturierende Oberfläche in Abhängigkeit zum gemessenen Abstand, der zu strukturierenden Oberfläche geregelt wird.

17. Verfahren nach Anspruch 15 oder 16,
**dadurch gekennzeichnet, daß** vor der Ausbildung der Strukturen eine Schicht aus einem Medium höherer Absorption für die verwendete Laserstrahlung temporär auf die zu strukturierende Oberfläche aufgebracht wird.

18. Verfahren nach einem der Ansprüche 15 bis 17,
**dadurch gekennzeichnet, daß** die Oberfläche nach der Ausbildung der Strukturen gereinigt wird.

19. Verfahren nach Anspruch 18,
**dadurch gekennzeichnet, daß** zur Reinigung die Wärmeenergie des Kühlwassers und/oder der Kühlluft der Laserlichtquelle (5) verwendet wird.

20. Verfahren nach einem der Ansprüche 15 bis 19,
**dadurch gekennzeichnet, daß** vor der Ausbildung der Strukturierung die Zusammensetzung des zu strukturierenden Materials bezüglich der Absorptions- bzw. Reflexionseigenschaften bestimmt wird und die Laserparameter entsprechend geregelt werden.

21. Verfahren nach einem der Ansprüche 15 bis 20,
**dadurch gekennzeichnet, daß** die Strukturierung in Form von Mikrokratern, die als Verdrängungsraum für gleitförderne Medien wirken, in einer Größe ausgebildet werden, die für das menschliche Auge in einem Abstand von mindestens 1 Meter nicht erkennbar sind und so das optische Bild der Oberfläche nahezu nicht beeinflussen.

22. Verfahren nach einem der Ansprüche 15 bis 21,
**dadurch gekennzeichnet, daß** die Strukturierung in vorgebbaren Rastern ausgebildet wird, wobei strukturierte Bereiche und unstrukturierte Bereiche alternierend angeordnet werden.

23. Verfahren nach einem der Ansprüche 15 bis 20,
**dadurch gekennzeichnet, daß** die Strukturierung in Form vorgebbarer, zweidimensionaler Bilddarstellungen ausgebildet wird.

24. Verfahren nach Anspruch 23,
**dadurch gekennzeichnet, daß** für die Bilddarstellungen durch Beeinflussung der Strukturgröße und Strukturtiefe ein dreidimensionaler Effekt erreicht wird.

25. Verfahren nach einem der Ansprüche 15 bis 24,
**dadurch gekennzeichnet, daß** die Geschwindigkeit oder die Beschleunigung der Bewegung des mobilen Teiles (1) mit einem antriebslosen Rad (12) gemessen wird.

26. Verfahren nach einem der Ansprüche 15 bis 25,
**dadurch gekennzeichnet, daß** die Laserlichtquelle (5) mittels eines Sicherheitsschalters abge-schaltet wird, wenn der/die Laserstrahl(en) (3) auf Bereiche außerhalb eines geschützten Bereiches (13) der Vorrichtung gerichtet wird/werden.

27. Verfahren nach einem der Ansprüche 15 bis 26, **dadurch gekennzeichnet, daß** die Laserlichtquelle (5) abgeschaltet wird, wenn mit einem Abstandssensor (8) ein Abstandswert gemessen wird, der einen vorgebbaren Grenzwert überschritet.

28. Verfahren nach einem der Ansprüche 15 bis 27, **dadurch gekennzeichnet, daß** der Raum der Vorrichtung, in dem die optischen Elemente zur Führung (2) und Formung des/der Laserstrahls(en) (3) aufgenommen sind, mit einem Druck beaufschlagt wird, der oberhalb des Umgebungsdruckes liegt.

29. Verfahren nach einem der Ansprüche 15 bis 28, **dadurch gekennzeichnet, daß** die Bewegung des mobilen Teiles (1) mittels eines Leitstrahlsystems (22) gesteuert wird.

30. Verfahren nach einem der Ansprüche 15 bis 28, **dadurch gekennzeichnet, daß** bei einer diskontinuierlichen Bearbeitung, die Bewegung und Positionierung des mobilen Teiles (1) mittels einer elektronischen Bildverarbeitung (7), mit der die Rasterung eines aus einzelnen plattenförmigen Elementen gebildeten Fußbodenbelages erfaßt wird, gesteuert wird.

31. Verfahren nach einem der Ansprüche 15 bis 30, **dadurch gekennzeichnet, daß** die Ablenkung des/der Laserstrahls/Laserstrahlen (3) mit einem Vektor- oder Rasterverfahren, zur Ausbildung der Strukturen auf den Oberflächen, durchgeführt wird.

## Claims

1. Device for structuring the surface of floor coverings which have already been laid, having at least one laser beam which can be moved with controlled intensity in at least two dimensions across the surface to be structured, **characterized in that** the elements for guiding (2) and shaping the laser beam(s) (3) are arranged on an element (9) which can be displaced in two axes which are oriented perpendicular to one another, and the displaceable element (9) is accommodated in a mobile part (1).

2. Device according to Claim 1, **characterized in that** at least one proximity sensor (8) is provided on the mobile part (1) of the device.

3. Device according to Claim 1 or 2, **characterized in that** a protective device which is transparent to the laser radiation used is arranged between the surface to be structured and optical elements for guiding (2) and shaping the laser beam(s) (3) in the beam direction.

4. Device according to one of Claims 1 to 3, **characterized in that** the protective device is an exchangeable protective panel, a protective panel provided with a longitudinal incision, a sheet, a cross-jet system and/or a suction system.

5. Device according to one of Claims 1 to 4, **characterized in that** the laser beam(s) (3) is/are transmitted at least in part via optical fibres (4).

6. Device according to one of Claims 1 to 5, **characterized in that** the laser beam(s) (3) and/or the mobile part (1) of the device can be guided or moved in a controlled manner over the surface which is to be structured.

7. Device according to one of Claims 1 to 6, **characterized in that** the laser beam(s) (3) is/are controlled as a function of the speed or the position of the mobile part (1) of the device.

8. Device according to one of Claims 1 to 7, **characterized in that** the beam (3) of a laser light source (5) can be split into at least two laser beams which can be used for structuring by means of at least one beam splitter.

9. Device according to one of Claims 1 to 8, **characterized in that** the laser light source (5) is a pulsed laser.

10. Device according to one of Claims 1 to 8, **characterized in that** the beam. is transmitted by means of a mirror system (2) and/or optical fibres (4).

11. Device according to one of Claims 1 to 10, **characterized in that** a guidance, navigation and/or image-processing system (6, 7) is provided for controlling the movement/positioning of the mobile part (1) of the device.

12. Device according to one of Claims 1 to 11, **characterized in that** an image-processing system (7) which records the structure formed is provided.

13. Device according to one of Claims 1 to 12, **characterized in that** there is an integral device for cleaning the structured surface.

14. Device according to one of Claims 1 to 13, **characterized in that** there is at least one collision-prevention system (10) on the mobile part (1).

15. Method for structuring the surface of floor coverings which have already been laid using at least one laser beam, which can be moved with controlled intensity in at least two dimensions across the surface which is to be structured, a mobile part (1) of a device being moved in a defined way over the surface to be structured or being positioned in that area, and the laser beam(s) (3) being controlled as a function of the speed or position, **characterized in that** the mobile part of the device is arranged with an element (9) which can be displaced thereon in two axes which are oriented perpendicular to one another, in which mobile part at least the elements for guiding (2) and shaping the laser beam are accommodated.

16. Method according to Claim 15, **characterized in that** the laser power and/or the focusing onto the surface to be structured is controlled as a function of the measured distance from the surface to be structured.

17. Method according to Claim 15 or 16, **characterized in that**, before the structures are formed, a layer of a medium which exhibits relatively high absorption with respect to the laser radiation used is temporarily applied to the surface to be structured.

18. Method according to one of Claims 15 to 17, **characterized in that** the surface is cleaned after the structures have been formed.

19. Method according to Claim 18, **characterized in that** the thermal energy of the cooling water and/or the cooling air of the laser light source (5) is used for cleaning.

20. Method according to one of Claims 15 to 19, **characterized in that** before the structuring is formed the composition of the material to be structured is determined with regard to its absorption and reflection properties, and the laser parameters are adjusted accordingly.

21. Method according to one of Claims 15 to 20, **characterized in that** the structuring is designed in the form of microcraters, which act as displacement space for slip-promoting media, of a size which is not visible to the human eye at a distance of at least 1 metre, so that the visual appearance of the surface is scarcely affected.

22. Method according to one of Claims 15 to 21, **characterized in that** the structuring is designed in predeterminable rasters in which structured areas and unstructured areas are arranged alternately.

23. Method according to one of Claims 15 to 20, **characterized in that** the structuring is designed in the form of predeterminable, two-dimensional pictorial representations.

24. Method according to Claim 23, **characterized in that** a three-dimensional effect is achieved for the pictorial representations by influencing the size and depth of the structures.

25. Method according to one of Claims 15 to 24, **characterized in that** the speed or the acceleration of the movement of the mobile part (1) is measured using an undriven wheel (12).

26. Method according to one of Claims 15 to 25, **characterized in that** the laser light source (5) is switched off by means of a safety switch when the laser beam(s) (3) is/are directed at areas which lie outside a protected area (13) of the device.

27. Method according to one of Claims 15 to 26, **characterized in that** the laser light source (5) is switched off when a proximity sensor (8) measures a distance which goes beyond a predeterminable limit.

28. Method according to one of Claims 15 to 27, **characterized in that** the chamber of the device in which the optical elements for guiding (2) and shaping the laser beam(s) (3) are accommodated can be subjected to a pressure which is above ambient pressure.

29. Method according to one of Claims 15 to 28, **characterized in that** the movement of the mobile part (1) is controlled by means of a guidance beam system (22).

30. Method according to one of Claims 15 to 28, **characterized in that** for discontinuous working the movement and positioning of the mobile part (1) is controlled by means of an electronic image-processing system (7), which is used to record the pattern of a floor covering formed from individual slab-like elements.

31. Method according to one of Claims 15 to 30, **characterized in that** the deflection of the laser beam(s) (3) is carried out using a vector or raster technique in order to form the structures on the surfaces.

## Revendications

1. Dispositif de structuration superficielle de revêtements de sols posés , comportant au moins un rayon laser commandé en intensité et déplaçable dans au moins deux dimensions au-dessus de la surface à structurer, **caractérisé en ce que** les éléments de guidage (2) et de façonnage du/des rayon/s laser (3) sont disposés sur un élément (9) coulissant suivant deux axes orthogonaux entre eux, et **en ce que** l'élément coulissant (9) est logé dans une partie mobile (1).

2. Dispositif selon la revendication 1, **caractérisé en ce qu'**au moins un détecteur d'écartement (8) est prévu sur la partie mobile (1) du dispositif.

3. Dispositif selon la revendication 1 ou 2, **caractérisé en ce qu'**un dispositif de protection transparent au rayonnement laser utilisé est disposé dans la direction de rayonnement, entre la surface à structurer et les éléments optiques de guidage (2) et de façonnage du/des rayon/s laser (3).

4. Dispositif selon l'une des revendications 1 à 3, **caractérisé en ce que** le dispositif de protection est une vitre de protection échangeable, ou une vitre de protection pourvue d'un profil longitudinal, une feuille, un système « Cross- Jet » et/ou un système d'aspiration.

5. Dispositif selon l'une des revendications 1 à 4, **caractérisé** en ce la transmission du/des rayon/s laser (3) est réalisée au moins en partie par des fibres optiques (4).

6. Dispositif selon l'une des revendications 1 à 5, **caractérisé en ce que** le/les rayon/s laser (3) et/ou la partie mobile (1) du dispositif est/sont commandé/s en étant guidé/s ou déplaçable/s au-dessus de la surface à structurer.

7. Dispositif selon l'une des revendications 1 à 6, **caractérisé en ce que** le/les rayon/s laser (3) est/sont commandé/s en fonction de la vitesse ou de la position de la partie mobile (1) du dispositif.

8. Dispositif selon l'une des revendications 1 à 7, **caractérisé en ce que** le rayon (3) d'une source de lumière laser (5) est partagé en au moins deux rayons laser utilisables pour la structuration au moyen d'au moins un séparateur de faisceau.

9. Dispositif selon l'une des revendications 1 à 8, **caractérisé en ce que** la source de lumière laser (5) est un laser en régime pulsé.

10. Dispositif selon l'une des revendications 1 à 8, **caractérisé en ce que** la transmission du rayon est réalisée au moyen d'un système de miroir (2) et/ou de fibres optiques (4).

11. Dispositif selon l'une des revendications 1 à 10, **caractérisé en ce qu'**un système directeur, de navigation et/ou de traitement d'images (6,7) est prévu pour la commande du déplacement/ positionnement de la partie mobile (1) du dispositif.

12. Dispositif selon l'une des revendications 1 à 11, **caractérisé en ce qu'**il est prévu un système de traitement d'images (7) saisissant la structure formée.

13. Dispositif selon l'une des revendications 1 à 12, **caractérisé en ce qu'**un dispositif purifiant la surface structurée est intégré.

14. Dispositif selon l'une des revendications 1 à 13 **caractérisé en ce qu'**au moins un système de protection anti- collision (10) est prévu sur la partie mobile (1).

15. Procédé de structuration superficielle de revêtements de sols posés, au moyen d'au moins un rayon laser commandé en intensité et déplaçable au moins dans deux dimensions au-dessus de la surface à structurer, dans lequel une partie mobile (1) d'un dispositif se déplace au-dessus de la surface à structurer ou y est positionnée de manière définie et le/ les rayon/s laser (3) est commandé en fonction de la vitesse ou de la position, **caractérisé en ce que** la partie mobile du dispositif est équipée d'un élément (9) coulissant suivant deux axes orthogonaux entre eux, et dans lequel au moins les éléments de guidage (2) et de façonnage du rayon laser sont logés.

16. Procédé selon la revendication 15, **caractérisé en ce que** la puissance du laser et/ou la focalisation sur la surface à structurer est réglée en fonction de l'écartement mesuré de la surface à structurer.

17. Procédé selon la revendication 15 ou 16, **caractérisé en ce que**, avant la formation des structures, on dépose temporairement sur la surface à structurer une couche d'un milieu présentant une plus grande absorption du rayonnement laser utilisé.

18. Procédé selon l'une des revendications 15 à 17, **caractérisé en ce que** la surface est purifiée après la formation des structures.

19. Procédé selon la revendication 18, **caractérisé en ce que** pour la purification on utilise l'énergie thermique de l'eau de refroidissement et/ou de l'air de refroidissement de la source de lumière laser (5).

20. Procédé selon l'une des revendications 15 à 19, **caractérisé en ce que**, avant la formation de la structuration, on détermine l'assemblage du matériau à structurer en regard des caractéristiques d'absorption ou de réflexion, et on règle corrélativement les paramètres du laser.

21. Procédé selon l'une des revendications 15 à 20, **caractérisé en ce que** la structuration est exécutée sous la forme de micro- cratères qui agissent comme espace de déplacement pour des milieux favorisant le glissement, qui sont agencés dans une taille non reconnaissable par l'oeil humain à une distance d'au moins 1 mètre, et ainsi n'influencent presque pas l'image optique de la surface.

22. Procédé selon l'une des revendications 15 à 21, **caractérisé en ce que** la structuration est réalisée en réseaux prédéterminés, et **en ce que** des domaines structurés et des domaines non structurés sont disposés en alternance.

23. Procédé selon l'une des revendications 15 à 20, **caractérisé en ce que** la structuration est réalisée sous la forme de représentation d'images prédéterminées en deux dimensions.

24. Procédé selon la revendication 23, **caractérisé en ce que** pour la représentation d'images, on atteint un effet tridimensionnel en influant sur la dimension de la structure et la profondeur de la structure.

25. Procédé selon l'une des revendications 15 à 24, **caractérisé en ce qu'**on mesure la vitesse ou l'accélération du mouvement de la partie mobile (1) par une roue à inertie (12).

26. Procédé selon l'une des revendications 15 à 25, **caractérisé en ce que** la source de lumière laser (5) est déconnectée au moyen d'un interrupteur de sécurité si le/ les rayon/s laser (3) est/sont dirigé/s sur des zones extérieures à une zone protégée (13) du dispositif.

27. Procédé selon l'une des revendications 15 à 26, **caractérisée en ce que** la source de lumière laser (5) est déconnectée si une valeur d'écartement qui dépasse une valeur limite prédéterminée est mesurée par un détecteur d'écartement (8).

28. Procédé selon l'une des revendications 15 à 27, **caractérisé en ce que** l'espace du dispositif dans lequel les éléments optiques de guidage (2) et de façonnage du/des rayon/s laser (3) sont logés, est soumis à une pression supérieure à la pression environnante.

29. Procédé selon l'une des revendications 15 à 28, **caractérisé en ce que** le déplacement de la partie mobile (1) est commandé par un système de rayon directeur (22).

30. Procédé selon l'une des revendications 15 à 28, **caractérisé en ce que** dans un traitement discontinu, le déplacement et le positionnement de la partie mobile (1) sont commandés au moyen d'un traitement d'images électronique (7), par lequel est saisi le tramage d'un revêtement de sol formé de différents éléments en forme de plaques.

31. Procédé selon l'une des revendications 15 à 30, **caractérisé en ce que** le balayage du/des rayon/s laser (3) est exécuté par un procédé à vecteur ou à trame, pour la réalisation des structures sur les surfaces.
